# EUROPÄISCHE PATENTSCHRIFT

(11) **EP 1 049 915 B1**
(45) Veröffentlichungstag und Bekanntmachung des Hinweises auf die Patenterteilung: **24.09.2003**
(21) Anmeldenummer: 98952494.7
(22) Anmeldetag: 18.11.1998
(51) Int. Cl.: G01L 1/16, G01M 13/02

(54) **PIEZOELEKTRISCHER DEHNUNGSSENSOR UND VERFAHREN ZUR MESSUNG VON DEHNUNGEN AUF OBERFLÄCHEN MIT EINEM SOLCHEN SENSOR**
PIEZO-ELECTRIC STRETCHING DETECTOR AND METHOD FOR MEASURING STRETCHING PHENOMENA USING SUCH A DETECTOR
DETECTEUR D'ALLONGEMENT PIEZO-ELECTRIQUE ET PROCEDE PERMETTANT DE MESURER DES PHENOMENES D'ALLONGEMENT SUR DES SURFACES AVEC UN DETECTEUR DE CE TYPE

(30) Priorität: 18.11.1997 CH 265997
(43) Veröffentlichungstag der Anmeldung: 08.11.2000
(73) Patentinhaber: HERA Rotterdam B.V., 3062 MA Rotterdam (NL)
(72) Erfinder: SCHLÄPFER, Bruno, CH-8523 Hagenbuch (CH); MÄCHLER, Dario, CH-8487 Zell (CH); TANNER, Matthias, CH-8261 Hemishofen (CH)
(74) Vertreter: Patentanwälte Breiter + Wiedmer AG
(86) Internationale Anmeldenummer: CH9800496
(87) Internationale Veröffentlichungsnummer: WO99026046

(56) Entgegenhaltungen:
- EP-A- 0 012 867
- EP-A- 0 363 785
- EP-A- 0 459 069
- US-A- 2 558 563

## Beschreibung

Die vorliegende Erfindung bezieht sich auf einen Dehnungsaufnehmer nach dem Oberbegriff von Patentanspruch 1. Weiter betrifft die Erfindung ein Verfahren zum elektrischen Messen mit dem Dehnungsaufnehmer.

Es ist seit langem bekannt, dass bei Einwirkung einer Kraft auf einen piezoelektrischen Körper durch die dielektrische Verschiebung Oberflächenladungen entstehen, welche mit Elektroden abgegriffen werden. Es ist weiter bekannt, im Pressen- und Werkzeugbau, aber auch an anderen steifen Strukturen, piezoelektrische Dehnungssensoren als Oberflächen- Dehnungssensoren zu verwenden. An diesen steifen Strukturen, wie auch an robusten Werkzeugmaschinen, sind Dehnungssensoren mit hohem Auflösungsvermögen gefordert. Bei der Überwachung von zwischen zwei Werkzeughälften eingeklemmten Teilen, welche nicht entformt wurden, sind ebenfalls Dehnungssensoren mit hoher Empfindlichkeit erforderlich, da beispielsweise auf einer 1000 kN-Presse bis zu 50 N detektiert werden müssen. In dieser Grössenordnung muss ein Microstrain (µε) ein 10 Volt-Signal (V) abgeben können. Dazu sind weder heute bekannte Dehnungssensoren noch entsprechende Verfahren in der Lage.

Dagegen sind Dehnungsaufnehmer bekannt, welche mittels zweier Schrauben auf die zu messende Oberfläche gepresst werden, damit die zwischen den beiden Schrauben auftretenden Dehnungen in axialer Richtung gemessen werden können. Mittels mechanischer Verstärkung kann die Oberflächendehnung vergrössert werden, beispielsweise bis zu einem Faktor 10. Solche Aufnehmer haben, wie angedeutet, den Nachteil, dass nur Dehnungen in axialer Richtung zwischen den beiden Schrauben erfasst werden können, und dass die Empfindlichkeit die geforderte Auflösung nicht erreicht.

Es sind auch piezoelektrisch wirkende Sensoren bekannt, welche mit nur einer Schraube auf die zu messende Oberfläche gepresst werden. Dabei werden zwei integrierte Piezoquarzscheiben durch Schubkräfte belastet, die erzeugten elektrischen Ladungen können abgegriffen werden. Diese Dehnungssensoren erzeugen jedoch eine zu kleine Auflösung. So werden in der CH,A5 687647 Aufnehmer mit dehnungsempfindlichen Elementen, also Dehnungssensoren, beschrieben, welche unter anderem Piezofolien sein können. Auch nach dieser schweizerischen Patentschrift gelingt es wegen der Wahl der Messelemente nicht, mit der für spezielle Anwendungen, beispielsweise im Pressen-, Werkzeug- und Werkzeugmaschinenbau, erforderlichen hohen Auflösung messen zu können.

Weiter müssen alle vorstehend erwähnten Sensoren richtungsabhängig eingebaut werden, mit ändern Worten muss für den Erhalt von optimalen Messresultaten immer die Hauptdehnungsrichtung gesucht werden. Dies ist jedoch in den meisten Fällen mit einem grossen zusätzlichen Aufwand verbunden.

Die EP,A1 0459069 bezieht sich auf einen Zwischenlage-Sensor mit kraftmässig parallel geschalteten Messelementen. Diese sollen wesentlich dünner sein, keine zusätzlichen Adapterplatten und Druckscheiben erfordern und mit wesentlich weniger Luftspalten in der Kraftmessanordnung auskommen. Mit Blick auf diese Ausgangslage weisen die aus Scheiben bestehenden Messelemente höchstens fünf Spaltfederschichten auf. Die Messetemente sind zwingend unter hoher mechanischer Vorspannung eingeschweisst, wobei diese Messelemente gemeinsam mit Ladungsverstärkern und weiteren Elektronikeinheiten eine Montageeinheit bilden. Es ist von wesentlicher Bedeutung, dass es sich hier um Kraftmessetemente handelt.

Ein piezoelektrischer Sensor gemäss der EP,A2 0363785 dient der Messung von dynamischen Kräften zwischen zwei gegenüberliegenden Oberflächen von mechanischen Bestandteilen, beispielsweise in einem Kopf für eine Bohr- oder Fräsmaschine. Ein piezoelektrischer Sensor ist insbesondere als Dichtungsring zu einem aufgeschraubten Spanndom der Maschine ausgebildet. Der Sensor im engeren Sinne ist sandwichartig aufgebaut, mit einer Kernschicht aus piezoelektrischem Material und zwei Deckschichten aus elektrisch leitendem Material. Diese beiden Deckschichten können auch durch Metallisieren der Kemschicht aufgebracht sein. Der Verfahrensablauf ist in Fig. 11 charakterisiert. Nach der Anzeige einer hohen Anfangskraft in einem ersten Zeitintervall verläuft die Kraft in einem zweiten Zeitintervall etwa konstant. Auch die EP,A2 0363785 betrifft die Kraftmessung.

Der vorliegenden Erfindung liegt deshalb die Aufgabe zugrunde, einen Dehnungsaufnehmer mit einem piezoelektrischen Dehnungssensor der eingangs genannten Art für richtungsunabhängige Dehnungsmessungen mit hoher Auflösung zu schaffen. Der Dehnungsaufnehmer soll mit einem optimal adaptierten Dehnungssensor unter Anwendung eines optimalen Verfahrens eingesetzt werden können.

Bezüglich des Dehnungsaufnehmers wird die Aufgabe erfindungsgemäss nach den Merkmalen von Patentanspruch 1 gelöst.

Spezielle und weiterbildende Ausführungsformen des Dehnungssensors ergeben sich aus den abhängigen Ansprüchen.

Bei der erfindungsgemässen Dehnungsmessung erfolgt nicht wie üblich eine direkte Krafteinwirkung auf das piezokeramische Material. Im Metall-Metall-Keramik-Verbund werden tangentiale Kräfte in Folge positiver oder negativer Dehnungen von der zu messenden Oberfläche auf das Metallblech und von dort auf den Dehnungssensor übertragen, sie bewirken dort Oberflächenladungen, welche abgreifbar sind. Dank dem Ersatz der bisher üblichen piezoelektrischen Materialien durch Piezokeramik werden auch bei kleinsten Dehnungen so grosse elektrische Ladungen erzeugt, dass sie direkt oder zweckmässig mit Ladungsverstärkern auswertbar sind.

Piezokeramische Materialien sind an sich bekannt, es handelt sich meist um oxidische Werkstoffe, beispielsweise auf der Basis von Bleioxid, Zirkonoxid und Titanoxid. Durch Zugabe von weiteren Metalloxiden, beispielsweise Oxiden der Elemente Lithium, Magnesium, Zink, Nickel, Mangan, Niob, Antimon und/oder Strontium können die Materialparameter fein abgestimmt und stabilisiert werden. Weiter können die physikalischen Eigenschaften der piezokeramischen Materialien durch Variation der Mischungsverhältnisse der Grundstoffe, die Mahldauer der Komponenten, die Sinterungsbedingungen und die Formgebung beeinflusst werden.

Das an sich als Piezokeramik bekannte Blei-Zirkonat-Titanat wird erfindungsgemäss bevorzugt eingesetzt. Die Kristallstruktur von Blei-Zirkonat-Titanat leitet sich vom Perowskit ab, einem Mineral der chemischen Formel CaTiO₃.

Der Träger für das piezokeramische Material besteht aus einer zweckmässig 0,05 - 0,25 mm dicken Metallscheibe, welche zweckmässig aus einem Stahloder Messingblech ausgestanzt ist und vorzugsweise einen Durchmesser im Bereich von 10 bis 60 mm hat. Bevorzugt coaxial, mit einem Durchmesser von 5 bis 30 mm und einer erfindungsgemässen Dicke von 0,05 bis 0,25 mm, wird das piezokeramische Material unlösbar befestigt Dies kann einerseits durch Verkleben oder Auflöten einer vorgeformten Keramikscheibe oder andererseits durch chemisches Abscheiden aus der Gasphase, was als CVD (chemical vapor deposition) bezeichnet wird, elektrochemische Abscheidung oder Aufdampfen auf dem Metallblech erfolgen. Die Haftfestigkeit der Piezokeramik auf der Metallscheibe muss, wie immer sie auch angebracht ist, hohe Anforderungen erfüllen. So darf ein Biegen um einen Rundstab von 10 mm Durchmessem keine Trennung zwischen Piezokeramik und Metallscheibe erfolgen.

Nach einer besonders vorteilhaften Ausführungsform der Erfindung sind die Dehnungssensoren als piezokeramische Schallgebermembranen ausgebildet. Diese haben eine mechanische Grundresonanz, welche durch die Geometrie festgelegt ist Neben der Grundresonanz treten harmonische Oberschwingungen und Resonanzen in Längs- und Querrichtung auf, bei Scheiben insbesondere auch in Radialrichtung, falls der Durchmesser wesentlich grösser als die Dicke ist.

Mit einem erfindungsgemässen Dehnungsaufnehmer können beispielsweise folgende technische Daten erreicht werden:

| | | |
|---|---|---|
| Messbereich max./min. | µε | 500 |
| Überlastungsbereich | µε | 1000 |
| Empfindlichkeit Piezokeramik-Sensor | pC/µε | ≅700 (richtungsunabhängig) |
| Temperaturbereich Piezokeramik-Sensor (Ø 10 mm) | °C | 50 (Dauertemperatur:35) |
| Linearität & Hysterese | %FS | 1 - 2 |

Der erfindungsgemässe piezokeramische Dehnungsaufnehmer kann unter anderem für Überwachungsaufgaben an sehr steifen, schnelllaufenden Pressen zum Erfassen von Prozessfehlern, beispielsweise in Formen eingeklemmte Pressen zum Erfassen von Prozessfehlem, beispielsweise in Formen eingeklemmte Teile, eingesetzt werden. Weiter kann der Dehnungsaufnehmer in Spritzgiess- und Metalldruckgusswerkzeugen zum Formschutz eingesetzt werden, indem er an einer optimalen Stelle der Maschinenstruktur aufgepresst oder befestigt wird, beispielsweise an einem Kniehebel. Abweichungen von der Idealschliesskurve können erfindungsgemäss mit hoher Auflösung gemessen werden. So können 5 kg an einer 100 t-Presse erfasst werden. Trotzdem kann mit demselben Dehnungssensor auch eine 500-fach höhere Dehnung erfasst werden.

Der piezokeramische Dehnungssensor wird mit dem elastischen Anpresskörper des Dehnungsaufnehmers auf eine Oberfläche gedrückt, bis ein Kraft- bzw. Reibschluss zwischen dem Metallblech und der Oberfläche erfolgt. Weiter kann das Metallblech mit der Oberfläche verklebt, verlötet oder auf eine andere geeignete Weise unlösbar mit der zu messenden Oberfläche verbunden werden. In allen Fällen werden positive und negative Dehnungen von der Oberfläche auf das Metallblech des Dehnungssensors und von diesem auf das piezokeramische Material übertragen. Dieses piezoelektrische Messprinzip erlaubt Auflösungen im Nanometerbereich.

Das Aufnehmergehäuse des Dehnungsaufnehmers ist vorzugsweise von einem Schraubenloch durchgriffen oder weist wenigstens zwei regelmässig über den Umfang verteilte, mit der Öffnung flächenbündige Flansche mit mindestens je einem Schraubenloch oder -schlitz auf. Das in sich stabile Aufnehmergehäuse erlaubt so ein starkes Andrücken des Dehnungssensors auf die zu messende Oberfläche über den elastischen Druckkörper.

Zweckmässig sind die Dehnungssensoren auf dem überstehenden Druckkörper des Dehnungsaufnehmers mit einer metallischen oder metallisierten Folie abgedeckt und so gegen schädliche chemische und/oder mechanische Einwirkungen geschützt. Diese Folie kann vor der Montage des Dehnungsaufnehmers entfernt werden, vorzugsweise wird der Dehnungsaufnehmer mit aufgelegter Schutzfolie befestigt.

In bezug auf das Verfahren zum elektrischen Messen mit einem Dehnungsaufnehmer wird die Aufgabe erfindungsgemäss nach den Merkmalen von Patentanspruch 7 gelöst

Die hohe Empfindlichkeit der Dehnungssensoren des erfindungsgemässen Dehnungsaufnehmers, verbunden mit einer hohen Messspanne bis zu 500 Microstrain (µε) verlangen geradezu nach einem Ladungsverstärker mit einer schnellen Bereichsumschaltung im Mikrosekundenbereich von einem extrem kleinen Messbereich auf einen grossen Messbereich. Damit kann beispielsweise mit ein- und demselben Dehnungssensor sowohl ein hochempfindlicher Formschutz als auch eine Gesamtkraftmessung verwirklicht werden.

Ladungsverstärker formen die vom Dehnungssensor abgegebene Ladung in eine dazu proportionale Spannung um. Dies geschieht üblicherweise dadurch, dass die vom Dehnungssensor abgegebene Ladung am invertierenden Eingang eines Operationsverstärkers einen umgekehrt proportionalen Strom in einem Rückkopplungszweig bewirkt. Lässt man diesen Strom im Rückkopplungszweig durch einen Kondensator fliessen, so entsteht am Ausgang des Operationsverstärkers eine dem Sensorsignal proportionale Spannung. Da die Isolationswiderstände nicht unendlich hoch und die Fehlerströme des Operationsverstärkers nicht Null sind, entsteht mit der Zeit am Ausgang des Operationsverstärkers eine als Nullpunktfehler wahrnehmbare Spannung, die sogenannte Drift. Es ist also nötig, von Zeit zu Zeit die Ausgangsspannung rückzusetzen, bzw. den Kondensator im Rückkopplungszweig vollständig zu entladen.

Die Ausgangsspannung ist einerseits dem Sensorsignal proportional, andererseits aber auch von der Kapazität des Kondensators im Rückkopplungszweig abhängig. Diese Kondensatorkapazität legt fest, wieviel Ladung benötigt wird, um einen bestimmten Spannungswert zu erreichen. Man spricht somit vom Bereichskondensator.

Will man einen Ladungsverstärker mit zwei oder mehreren Messbereichen realisieren, so wird die Ausgangsspannung um den gewünschten Faktor verstärkt. Man erhält so auf einfache Art und Weise einen empfindlicheren Messbereich.

Es ist einleuchtend, dass die Kapazität des Bereichskondensators dem grössten benötigten Messbereich angepasst werden muss, da sich durch Verstärkung nur kleinere Messbereiche realisieren lassen. Solange der Verstärkungsfaktor nicht allzu hoch gewählt wurde, (typische Werte sind Faktoren von 2 bis 10), so fällt die Drift, die ja auch um den jeweiligen Faktor mitverstärkt wird, nicht ins Gewicht. Will man hingegen Ladungsverstärker mit weit auseinanderliegenden Bereichen realisieren, so ist diese Lösung nicht mehr erfolgversprechend.

Bei grossen Bereichsunterschieden muss eine Schaltungsvariante mit einem umschaltbaren Bereichskondensator gewählt werden. Dabei können die Bereiche in beliebigem Verhältnis zueinander stehen, die Grenzen werden lediglich durch die Abstufung der Kapazität seitens der Hersteller gesetzt.

Nach einer speziellen Ausführungsform des Verfahrens wird zur Beseitigung von mechanischen Störungen bei hochauflösenden Messungen einleitend eine Idealkurve aufgezeichnet und abgespeichert. Jeder weitere Zyklus wird überwacht und in Echtzeit mit der Idealkurve verglichen. Beim Auftreten einer Störung in Echtzeit wird die ldealkurve von der Störungskurve abgezogen, die Differenz unmittelbar mit einer Alarmschwelle verglichen und die Störung als Alarmschwellwert detektiert.

Im Gegensatz zu bisher bekannten Verfahren zur Dehnungsmessung können richtungsunabhängig alle auf der Oberfläche auftretenden Dehnungen detektiert werden. Das aufwendige und einschränkende Festlegen einer Hauptrichtung kann entfallen.

Die Messungen an der Oberfläche können nicht nur mit einem unter Bildung eines Kraftschlusses aufgepresste Dehnungssensoren durchgeführt werden. Das Metallblech des erfindungsgemässen Dehnungssensors kann auch auf die zu messende Oberfläche geklebt oder gelötet werden. Dies muss in einer so guten Qualität erfolgen, dass auch kleinste Dehnungen im Nanometerbereich auf das piezokeramische Material übertragen werden.

Die Erfindung wird anhand von in der Zeichnung dargestellten Ausführungsbeispielen, welche auch Gegenstand von abhängigen Patentansprüchen sind, näher erläutert. Es zeigen schematisch:
- - Fig. 1: eine Draufsicht auf einen Dehnungssensor,
- - Fig. 2: einen Axialschnitt durch einen aufgebrachten Dehnungssensor,
- - Fig. 3: einen Axialschnitt durch einen Dehnungsaufnehmer mit einem Dehnungssensor im Einbauzustand,
- - Fig. 4: eine aufgeschnittene Ansicht einer Anbauvariante eines Dehnungsaufnehmers.
- - Fig. 5: ein Sensorsignal in einem vollen Zyklus,
- - Fig. 6: ein Sensorsignal mit einer Störung,
- - Fig. 7: einen Alarmschwellwert, und
- - Fig. 8: einen Ladungsverstärker.

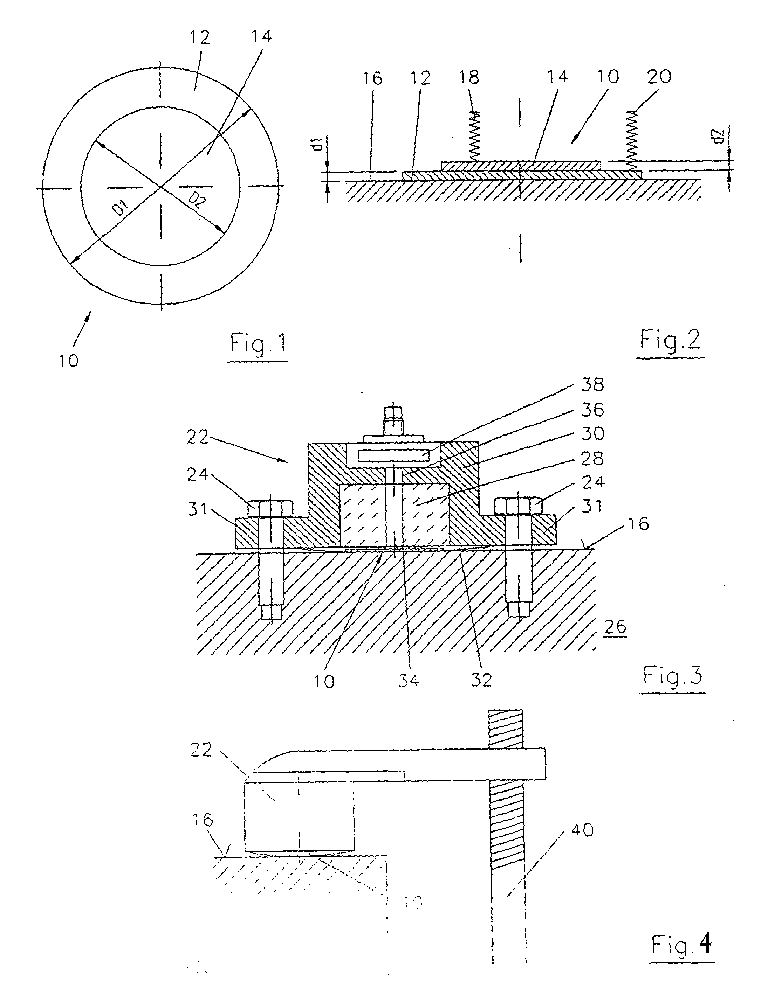

Fig. 1 zeigt ein dehnungsempfindliches Element, einen Dehnungssensor 10. Dieser besteht aus einer Metallscheibe 12, im vorliegenden Fall einer Stahlscheibe mit einem Durchmesser D₁ von 15 mm und einem coaxialen scheibenförmigen Formkörper aus piezokeramischem Material 14, im vorliegenden Fall mit einem Durchmesser D₂ von 10 mm.

In Fig. 2 ist ein Axialschnitt eines Dehnungssensors 10 gezeigt, welcher auf einer zu messenden Oberfläche 16 aufgelötet ist. Die Dicke d₁ der Stahlscheibe 12 liegt bei 0,15 mm, die Dicke d₂ des aufgeklebten scheibenförmigen piezokeramischen Materials 14 bei 0,10 mm. Die beiden Scheiben sind mit einem elektrisch leitenden Kleber miteinander verbunden. Eine auf das piezokeramische Material 14 drückende Feder 18 wirkt als elektrischer Kontakt und Leiter für die elektrischen Ladungen. Die Masse wird über eine weitere Feder 20, welche auf die Stahlscheibe 12 drückt, oder nach nicht dargestellten Ausführungsformen direkt über die Oberfläche 16 kontaktiert.

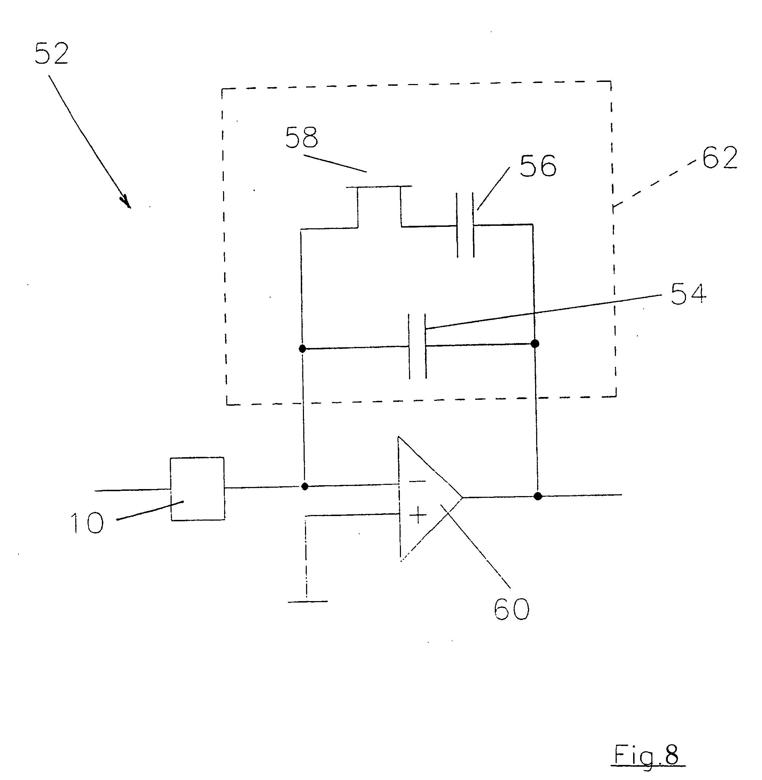

Beim Einsatz eines hier beschriebenen hochempfindlichen Dehnungssensors 10 mit Blei-Zirkonat-Titanat als piezokeramischem Material 14 ergibt 1 Microstrain (µε) eine Ladung von etwa 700 pC, was mit geeigneten Ladungsverstärkern (Fig.8) in ein Ausgangssignal von etwa 10 Volt gewandelt werden kann.

Ein in Fig. 3 dargestellter Dehnungsaufnehmer 22 mit einem Dehnungssensor 10 wird mittels Schrauben 24 auf die zu messende Oberfläche 16 einer sehr steifen Struktur 26, z.B. einer schnell laufenden Presse 26, geschraubt. Dabei wird ein elastischer Druckkörper 28 so stark auf die Oberfläche 16 gepresst. dass die auf diesem Druckkörper 28 stirnseitig aufgebrachten Dehnungssensoren 10 kraftschlüssig mit dieser Oberfläche 16 verbunden sind, d.h. einen Reibschluss bilden. Dadurch wird jede auf der Oberfläche 16 auftretende Dehnung 1:1 auf den Dehnungssensor 10 übertragen, welcher seinerseits ein dehnungsproportionales Signal abgibt. Der elastische Druckkörper 28 ist in beliebiger Form und Dicke, einteilig oder mehrteilig, so ausgebildet, dass wenigstens ein Dehnungssensor 10 stirnseitig darauf Platz findet.

Ein Aufnehmergehäuse 30 mit Flanschen 31 und Aussparungen für den/die elastischen Druckkörper 28 ist in sich stabil und robust ausgebildet. In bezug auf Tiefe und Form ist das Aufnehmergehäuse 30 so gestaltet, dass der eingebaute elastische Druckkörper 28 etwas vorsteht und somit durch das Festschrauben einen starken Druck auf den Dehnungssensor 10 ausübt. Die Dehnungssensoren 10 sind mittels einer metallischen oder metallisierten Folie 32 vor externen Einflüssen geschützt.

Die Signale des Dehnungssensors 10 werden über Kabel oder Federn 18, 20 (Fig. 2) durch axiale Bohrungen 34, 36 im elastischen Druckkörper 28 und im Aufnehmergehäuse 30 geführt. Eine Feder anstelle eines Kabels verhindert eine unerwünschte mechanische Verstärkung des piezokeramischen Materials 14 (Fig. 1, 2), vorliegend als Schallgeber-Membrane aus Blei-Zirkonat-Titanat ausgebildet, des Dehnungssensors 10. Im Aufnehmergehäuse 30 ist eine geeignete Auswerteelektronik 38 untergebracht, welche die elektrischen Signale des Dehnungssensors verarbeitet.

Ein in Fig. 4 dargestellter Dehnungsaufnehmer 22 ist mit einer Schraubenzwinge 40 auf die messende Oberfläche 16 gepresst. Auch hier wird bei starkem Anpressen eine kraftschlüssige Verbindung des Dehnungssensors 10 mit der Oberfläche 16 erreicht. Im übrigen entspricht Fig. 4 weitgehend Fig. 3.

Die ausserordentlich hohen Signalpegel, 1 Microstrain (µε) ≅ 700 pC ≅ 10 Volt mit Ladungsverstärkern, sind schwierig zu beherrschen, da beispielsweise Beschleunigungsanteile, Ventilschläge und andere Einflüsse einer Maschine schon Signale im Voltbereich erzeugen können.

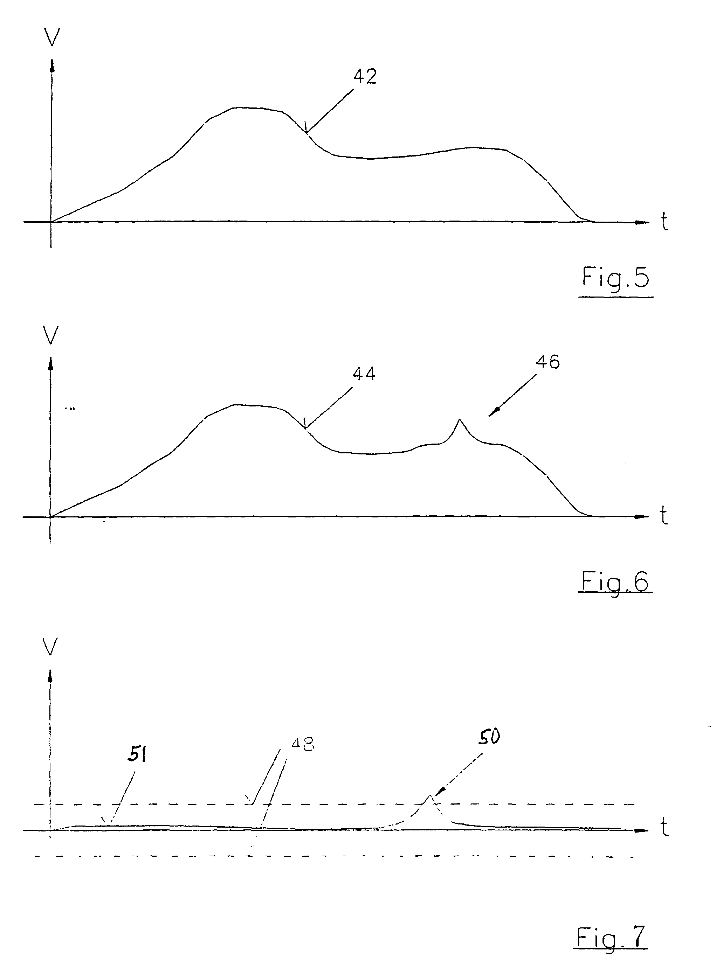

In den Fig. 5 bis 7 ist ein Verfahren dargestellt, welches solche Störeinflüsse in der Auswertung eliminiert. Die Ordinate zeigt jeweils das Sensorsignal V, und die Abszisse ist die Zeitachse t.

Vorerst wird die Maschine in einem Lernmodus einmal in einem vollen Zyklus gefahren und die Werte aufgezeichnet. Dies ergibt eine Kurve gemäss Fig. 5. Diese Kurve wird nun als Idealkurve 42 angenommen und abgespeichert. Jeder weitere Produktionszyklus wird im folgenden überwacht und in Echtzeit mit der Idealkurve 42 verglichen. In der Kurve 44 gemäss Fig. 6 tritt eine Störung auf, welche durch eine Signalspitze 46 aufgezeigt wird.

Nach Fig. 7 wird in Echtzeit die Idealkurve 42 (Fig. 2) von der Störungskurve 44 (Fig. 6) subtrahiert und unmittelbar anschliessend mit Alarmschwellen 48 verglichen, die resultierende Kurve 51 der Störung entsprechende Signalspitze 46 (Fig. 6) kann als Alarmschwellwert 50 detektiert werden.

Ein Ladungsverstärker 52 für Sensorsignale ist nach dem Schema gemäss Fig. 8 ausgeführt. Dabei ist zu einem kleinen Bereichskondensator 54 ein grosser Bereichskondensator 56 mittels eines elektronischen Schalters 58 zugeschaltet. Er kann als FET, Halbleiterrelais oder Optokoppler ausgeführt sein. Um die Drift auch im kleinen Bereich möglichst klein zu halten, wird als Operationsverstärker 60 eine möglichst hochohmige Version mit geringsten Eingangsströmen eingesetzt. Der Operationsverstärker 60 bewirkt in einem Rückkopplungszweig 62 einen umgekehrt proportionalen Strom.

Damit kann auch mit den hochauflosenden erfindungsgemässen Dehnungssensoren unter industriellen Produktionbedingungen uberwacht werden da regelmässig - Zyklus für Zyklus - auftretende Ventilschläge, Beschleunigungskomponenten und andere mechanische Einflüsse eliminiert werden.

## Patentansprüche

1. Dehnungsaufnehmer (22) mit wenigstens einem Dehnungssensor (10) zum Messen positiver und negativer Dehnungen auf Oberflächen (16) von steifen Strukturen (26) mittels elektrischer Signale,
**dadurch gekennzeichnet, dass**
der Dehnungssensor (10) auf der freien Stirnseite wenigstens eines überstehend in einem für sich stabilen Aufnehmergehäuse (30) eingelassenen, elastischen Druckkörpers (28) angeordnet ist, wobei das auf dem elastischen Druckkörper (28) aufliegende piezokeramische Material (14) als scheibenförmige Schicht einseitig auf biegbares Metallblech (12) aufgebracht oder als Formkörper unlösbar auf diesem befestigt ist, der Dehnungsaufnehmer (22) Mittel (24,40) zum Anpressen des Aufnehmergehäuses (30) an die zu messende Oberfläche (16) umfasst, und der in allen Dehnungsrichtungen der Oberfläche (16) empfindliche Dehnungssensor (10) aus piezokeramischem Material (14) kraftschlüssig auf diese Oberflächen (16) pressbar ist.

2. Dehnungsaufnehmer (22) nach Anspruch 1, **dadurch gekennzeichnet, dass** das Aufnehmergehäuse (30) von einem Schraubenloch durchgriffen ist oder wenigstens zwei regelmässig über den Umfang verteilte, mit der Öffnung flächenbündige Flansche (31) mit mindestens je einem Schraubenloch oder-schlitz aufweist.

3. Dehnungsaufnehmer (22) nach Anspruch 1 oder 2, **dadurch gekennzeichnet, dass** im Aufnehmergehäuse (30) eine Auswerteelektronik (38) angeordnet ist.

4. Dehnungsaufnehmer (22) nach einem der Ansprüche 1 bis 3. **dadurch gekennzeichnet, dass** elektrisch leitende Kabel oder Federn (18,20) durch axiale Bohrungen (34,36) im elastischen Druckkörper (38) und im Aufnehmergehäuse (30) von den Dehnungssensoren (10) zur Auswerteelektronik (38) geführt sind.

5. Dehnungsaufnehmer (22) nach einem der Ansprüche 1 bis 4, **dadurch gekennzeichnet, dass** die Dehnungssensoren (10) mit einer elektrisch leitfähigen metallischen oder metallisierten Folie (32) abgedeckt sind.

6. Dehnungsaufnehmer (22) nach einem der Ansprüche 1 bis 5, **dadurch gekennzeichnet, dass** das auf der zu messenden Oberfläche (16) auch unlösbar befestigbare piezokeramische Material (14) eine Dicke (d₂) von 0,05 - 0,25 mm und das Metallblech (12) eine Dicke (d₁) von 0,05 - 0,25 mm aufweist.

7. Verfahren zum elektrischen Messen von positiven und negativen Dehnungen auf Oberflächen (16) von steifen Strukturen (26), mit einem Dehnungsaufnehmer (22) nach einem der Ansprüche 1 bis 6, wobei die piezokeramisch abgegebenen Ladungen in Ladungsverstärkern (52) zu von Steuerungen verwendbaren Ausgangssignalen verstärkt werden, welche eine dazu proportionale Spannung haben, **dadurch gekennzeichnet, dass** der Ladungsverstärker (52) im Mikrosekundenbereich auf verschiedene Messbereiche umschaltet.

8. Verfahren nach Anspruch 7, **dadurch gekennzeichnet, dass** zur Beseitigung von mechanischen Störungen bei hochauflösenden Messungen einleitend eine Idealkurve (42) aufgezeichnet und abgespeichert wird, jeder weitere Zyklus überwacht und in Echtzeit mit der Idealkurve (42) verglichen wird, beim Auftreten einer Störung in Echtzeit die Idealkurve (42) von der Störungskurve (44) abgezogen, die Differenz unmittelbar mit einer Alarmschwelle (48) verglichen und die Störung als Alarmschwellwert (50) detektiert wird.

9. Verfahren nach Anspruch 7 oder 8, **dadurch gekennzeichnet, dass** der Dehnungssensor (10) richtungsunabhängig alle auf der Oberfläche (16) auftretenden Dehnungen detektiert.

10. Verfahren nach einem der Ansprüche 7 bis 9, **dadurch gekennzeichnet, dass** der Ladungsverstärker (52) bei Dehnungsmessungen von einer Auflösung im Nanometerbereich auf die Messung von bis etwa 1000-fach grösseren Dehnungen, insbesondere bis etwa 500-fach grösseren Dehnungen, oder von diesem Bereich grösserer Dehnungen in den Nanometerbereich schaltet.

## Claims

1. Elongation detector (22) with at least one elongation sensor (10) for measuring positive and negative elongations on surfaces (16) of rigid structures (16) by means of electrical signals,
**characterised in that**
the elongation sensor (10) is arranged on the free face of at least one resilient pressure body (28) inlet with a projection into a detector housing (30) which is stable in itself, where the piezo-ceramic material (14) lying on the resilient pressure body (28) is applied as a disc-like layer on one side of a flexible metal plate (12) or is permanently attached to this as a moulded body, the elongation detector (22) having means (24, 40) for pressing the detector housing (30) onto the surface (16) to be measured, and the elongation sensor (10) of piezo-ceramic material (14) sensitive in all elongation directions of the surface (16) can be pressed in a force fit onto this surface (16).

2. Elongation detector (22) according to claim 1, **characterised in that** the detector housing (30) is penetrated by a screw hole or has at least two flanges (31) flush with the opening and distributed evenly about the periphery, each with at least one screw hole or slot.

3. Elongation detector (22) according to claim 1 or 2, **characterised in that** analysis electronics (38) are arranged in the detector housing (30).

4. Elongation detector (22) according to any of claims 1 to 3, **characterised in that** electrically conductive cables or springs (18, 20) are guided through axial bores (34, 36) in the resilient pressure body (38) and in the detector housing (30) from the elongation sensors (10) to the analysis electronics (38).

5. Elongation detector (22) according to any of claims 1 to 4, **characterised in that** the elongation sensors (10) are covered with an electrically conductive metallic or metallised film (32).

6. Elongation detector (22) according to any of claims 1 to 5, **characterised in that** the piezo-ceramic material (14), also permanently attachable to the surface (16) to be measured, has a thickness (d₂) of 0.05 to 0.25 mm and the metal plate (12) has a thickness (d₁) of 0.05 to 0.25 mm.

7. Process for electrical measurement of positive and negative elongations on surfaces (16) of rigid structures (26) with an elongation detector (22) according to any of claims 1 to 6, where the piezo-ceramic emitted charges are amplified in charge amplifiers (52) into output signals which can be used by controls and which have a voltage proportional to the charge, where the charge amplifier (52) switches to various measurement bands in the microsecond range.

8. Process according to claim 7, **characterised in that** to eliminate mechanical faults in high resolution measurements, initially an ideal curve (42) is recorded and stored, each further cycle monitored and compared in real time with the ideal curve (42), on the occurrence of a fault in real time the ideal curve (42) is subtracted from the fault curve (44), the difference compared directly with an alarm threshold (48) and the fault detected as an alarm threshold value (50).

9. Process according to claim 7 or 8, **characterised in that** the elongation detector (22) detects all elongations occurring on the surface (16) direction-independently.

10. Process according to any of claims 7 to 9, **characterised in that** the charge amplifier (52), on elongation measurement, switches from a resolution in the nanometre band to measurement of greater elongations by up to around 1000 times, in particular up to around 500 times, or from this band of larger elongations to the nanometre band.

## Revendications

1. Détecteur d'allongement (22) qui inclut au moins un capteur d'allongement (10) pour mesurer, au moyen de signaux électriques, des allongements positifs et négatifs sur des surfaces (16) de structures rigides (26),
**caractérisé en ce que**
le capteur d'allongement (10) est agencé sur le côté avant libre d'au moins un corps élastique de compression (28) encastré dans un boîtier (30) de récepteur stable en lui-même, d'une manière telle que la matière piézocéramique (14) appliquée sur le corps élastique de compression (28) est montée sous forme de couche discoïdale sur un côté d'une tôle métallique flexible (12) ou y est attachée de manière indétachable en tant que corps de forme, que le détecteur d'allongement (22) comprend des moyens (24, 40) d'appui du boîtier (30) de détecteur sur la surface (16) à mesurer, et que le capteur d'allongement (10) en matière piézocéramique (14), sensible dans toutes les directions d'allongement de la surface (16), peut être appuyé par effet de force sur ces surfaces (16).

2. Détecteur d'allongement (22) selon la revendication 1, **caractérisé en ce que** le boîtier (30) de détecteur est traversé par un orifice de vis ou comporte au moins deux brides (31) réparties régulièrement sur la périphérie, en affleurement en surface avec l'ouverture, qui comportent au moins chacune un orifice ou une fente de vis.

3. Détecteur d'allongement (22) selon la revendication 1 ou 2, **caractérisé en ce qu'**une électronique d'évaluation (38) est agencée dans le boîtier (30) de détecteur.

4. Détecteur d'allongement (22) selon l'une quelconque des revendications précédentes, **caractérisé en ce que** des câbles ou des ressorts électriquement conducteurs (18, 20) sont guidés vers l'électronique d'évaluation (38) à travers des alésages axiaux (34, 36) dans le corps élastique de compression (28) et dans le boîtier (30) de détecteur.

5. Détecteur d'allongement (22) selon l'une quelconque des revendications précédentes, **caractérisé en ce que** les capteurs d'allongement (10) sont recouverts d'une feuille métallique ou métallisée (32) électriquement conductrice.

6. Détecteur d'allongement (22) selon l'une quelconque des revendications précédentes, **caractérisé en ce que** l'épaisseur (d₂) de la matière piézocéramique (14) est de 0,05 à 0,25 mm, y compris dans le cas où elle est attachée de façon indétachable sur la surface à mesurer (16), et que l'épaisseur (d₁) de la tôle métallique (12) est de 0,05 à 0,25 mm.

7. Procédé de mesure électrique d'allongements positifs et négatifs sur des surfaces (16) de structures rigides (26) au moyen d'un détecteur d'allongement (22) conforme à l'une quelconque des revendications précédentes, dans lequel les charges engendrées par effet piézocéramique sont amplifiées dans des amplificateurs (52) de charges pour former des signaux de sortie dont la tension est proportionnelle à ces charges et qui sont utilisables par des dispositifs de réglage, **caractérisé en ce que** l'amplificateur (52) de charge est commuté à diverses plages de mesure dans la plage des microsecondes.

8. Procédé selon la revendication 7, **caractérisé en ce que**, pour éliminer des perturbations mécaniques lors de mesures à haute résolution, une courbe idéale (42) est tracée et enregistrée au préalable, chaque cycle ultérieur est surveillé et comparé en temps réel à la courbe idéale (42), la courbe idéale (42) est soustraite de la courbe de perturbations (44) en temps réel lors de l'apparition d'une perturbation, la différence est immédiatement comparée à un seuil d'alarme (48) et la perturbation est détectée comme seuil d'alarme (50).

9. Procédé selon la revendication 7 ou 8, **caractérisé en ce que** le capteur d'allongement (10) détecte indépendamment de leurs directions tous les allongements qui apparaissent sur la surface (16).

10. Procédé selon l'une quelconque des revendications 7 à 9, **caractérisé en ce que** l'amplificateur (52) de charge commute d'une résolution comprise dans la plage des nanomètres à la mesure d'allongements qui peuvent être jusqu'à environ 1000 fois plus grands, en particulier jusqu'à des allongements environ 500 fois plus grands, ou commute à partir de cette plage d'allongements plus grands vers la plage des nanomètres.
